# EUROPEAN PATENT SPECIFICATION

(11) **EP 3 904 753 B1**
(45) Date of publication and mention of the grant of the patent: **12.11.2025**
(21) Application number: 20172376.4
(22) Date of filing: 30.04.2020
(51) Int. Cl.: F21S 4/22, F21V 15/01, F21Y 107/70, F21Y 115/10

(54) **BRACKET, LIGHT MODULE INCLUDING THE SAME AND METHOD FOR MANUFACTURING THE SAME**
HALTERUNG, LICHTMODUL DAMIT UND VERFAHREN ZUR HERSTELLUNG DAVON
SUPPORT, MODULE D'ÉCLAIRAGE LE COMPRENANT ET SON PROCÉDÉ DE FABRICATION

(43) Date of publication of application: 03.11.2021
(73) Proprietor: Lumileds LLC, San Jose, CA 95131 (US)
(72) Inventor: FENG, Chen Tian, 52068 Aachen (DE); ZHANG, Milly, 52068 Aachen (DE); MA, Yong Sheng, 52068 Aachen (DE); HSU, Hui Kai, 52068 Aachen (DE)
(74) Representative: Cohausz & Florack

(56) References cited:
- EP-A1- 3 348 897
- EP-A2- 3 072 747
- FR-A1- 2 233 199
- KR-A- 20100 084 093
- US-A1- 2004 066 048
- US-A1- 2008 185 851
- US-A1- 2018 209 599
- US-A1- 2020 109 828

## Description

### FIELD OF THE INVENTION

The present invention relates to a field of lighting, and in particular to a bracket for assembling a flexible light emitting strip in a light module, a light module including the bracket, and a method for manufacturing the bracket.

### BACKGROUND OF THE INVENTION

More and more flexible light emitting strip products have emerged in market recently. They can be used in many applications such as indoor or outdoor lighting, automotive lighting, decoration lighting or the like. In these products, a flexible light emitting strip is often sandwiched between an optical part and a bracket.

Conventionally, the flexible light emitting strip, the optical part and the bracket are assembled in a face-to-face way, which may leave gaps between the flexible light emitting strip and the optical part and result in inaccurate positioning of the flexible light emitting strip with respect to the optical part. The gaps and the inaccurate positioning may affect the light in-coupling efficiency from the flexible light emitting strip into the optical part, then affect the effect of optical processing, and thus finally affect the characteristic of light emitted out of the optical part.

In some products, adhesive tape or glue or the like is applied between the flexible light emitting strip and the bracket to improve the positioning and fixing of the flexible light emitting strip. However, the gaps between the flexible light emitting strip and the optical part are difficult to be eliminated completely by applying adhesive tape or glue or the like as described above, so inaccurate positioning of the flexible light emitting strip still exists. EP 3.072.747 discloses a bracket according to the preamble of claim 1.

### SUMMARY OF THE INVENTION

To alleviate or avoid the defects brought about by the gaps and the inaccurate positioning of a flexible light emitting strip with respect to an optical part, the inventor of the present invention recognizes that the face-to-face contact between the flexible light emitting strip and the bracket needs to be changed. In the present invention, by providing a plurality of projections on the bracket, the face-to-face contact may be changed to a line-to-face contact and/or a dot-to-face contact. The contour surface of the top ends of the plurality of projections forms the actual surface supporting the flexible light emitting strip. In addition, since each projection can be adjusted individually during an injection moulding process by adjustments of injection molds, the shape of the contour surface of the top ends of the plurality of projections can be changed, so as to achieve accurate positioning of the flexible light emitting strip. Furthermore, the bracket with a plurality of projections is convenient to be manufactured by an injection moulding process.

According to an aspect of the present invention, there is provided a bracket for assembling a flexible light emitting strip in a light module. The bracket comprises: a base plate, comprising a first side edge and a second side edge opposite to each other; a first side plate, located along the first side edge, extending from the base plate and comprising at least one first engagement member; and a second side plate, located along the second side edge, extending from the base plate, opposite to the first side plate and comprising at least one another first engagement member. The base plate, the first side plate and the second side plate form a groove, and the base plate comprises a plurality of projections on a surface inside the groove.

The bracket is designed to be used in a light module to accurately position a flexible light emitting strip onto an optical part. The first engagement members on side plates of the bracket can be coupled with the corresponding engagement members on an optical part in order to offer a fastening structure. And the projections on the base plate can abut and support the flexible light emitting strip at respective positions, in order to offer an accurate position of the light emitting strip with respect to the optical part, thus improving the light in-coupling efficiency into the optical part.

In exemplary embodiments, the base plate, the first side plate and the second side plate are one-piece, wherein the base plate, the first side plate and the second side plate are formed integrally. It makes the bracket more robust and the manufacturing process thereof easier. Optionally, the bracket can be manufactured by an injection moulding process using any suitable materials, such as plastic materials.

According to the invention, each of the first side edge and the second side edge has a curvilinear shape. The shapes of the first side edge and the second side edge may define the shape of the bracket, which may be adapted to the desired shape of a light module comprising the bracket.

In exemplary embodiments, the first side edge and the second side edge are parallel to each other, and the first side plate and the second side plate are parallel to each other. The flexible light emitting strip may typically have a cross-section of rectangular shape, so that a pair of side plates parallel to each other may fit the flexible light emitting strip better and thus support it better.

According to the invention, the projections on the base plate are ribs parallel to each other with each rib extending from the first side edge or the second side edge.

In exemplary embodiments, each of the first side plate and the second side plate comprise a plurality of projections on a surface inside the groove.

In exemplary embodiments, the projections on the first side plate are ribs parallel to each other with each rib extending from the first side edge, and the projections on the second side plate are ribs parallel to each other with each rib extending from the second side edge.

Ribs parallel to each other can simplify the manufacturing process of the bracket as the ribs parallel to each other are easier to form or adjust than projections in irregular forms. Since the flexible light emitting strip may be flexed or bent in length, the ribs extending from a side edge of the base plate can abut the flexible light emitting strip at positions along its length, which can offer better support to the strip and facilitate the adaptation to its shape.

In exemplary embodiments, each rib has a width ranging from 0.1 mm to 1 mm.

In exemplary embodiments, each rib has a height ranging from 0.2 mm to 1 mm.

In exemplary embodiments, each rib has an arc shape on its top surface.

In exemplary embodiments, the ribs on the base plate, the first side plate and the second side plate have a distribution ranging from 100 to 200 ribs per meter along the first side edge or the second side edge.

The width, height, shape of a rib or the distribution of the ribs may affect the effect of positioning the flexible light emitting strip towards the optical part and can be adjusted as required e.g. by adjusting the injection molds used in the manufacturing process of the bracket.

According to another aspect of the present invention, there is provided a light module. The light module comprises: the bracket described above; the flexible light emitting strip, comprising a back surface and a light emitting surface opposite to each other, wherein the back surface has a shape corresponding to the base plate; and an optical part, comprising a first surface and a second surface opposite to each other, a first side surface and a second side surface opposite to each other. The first surface has a shape corresponding to the light emitting surface of the flexible light emitting strip. The first side surface of the optical part has at least one second engagement member corresponding to the at least one first engagement member on the first side plate of the bracket, and the second side surface of the optical part has at least one another second engagement member corresponding to the at least one another first engagement member on the second side plate of the bracket. The flexible light emitting strip is disposed in the groove with the back surface of the flexible light emitting strip contacting the projections on the base plate of the bracket, the flexible light emitting strip being sandwiched between the bracket and the optical part with the first surface of the optical part contacting the light emitting surface of the flexible light emitting strip and the projections on the base plate pressing the back surface of the flexible light emitting strip, such that the light emitting surface of the flexible light emitting strip contacts the first surface of the optical part at any place of the light emitting surface. Each of the first engagement members and a corresponding one of the second engagement members are coupled with each other. And each of the another first engagement members and a corresponding one of the another second engagement members are coupled with each other.

In exemplary embodiments, the flexible light emitting strip is a flexible LED light strip.

In exemplary embodiments, a plurality of recesses are provided on the back surface of the flexible light emitting strip with each recess on the back surface corresponding to one of the projections on the base plate.

According to yet another aspect of the present invention, there is provided a method for manufacturing the bracket described above. The method comprises the steps of:
- manufacturing a sample bracket by injection moulding using injection molds;
   assembling the sample bracket with the flexible light emitting strip and the optical part;
- determining a gap between the light emitting surface of the flexible light emitting strip and the first surface of the optical part;
- adjusting the injection molds based upon a position of the gap;
- manufacturing a further sample bracket by injection moulding using the injection molds adjusted in the previous step, wherein at least one of a width, a height and a distribution of the projections on a base plate of the further sample bracket is adjusted according to the position of the gap; and
- iterating the steps of assembling, gap determination, injection molds adjustment, and sample bracket manufacturing until no further gap between the light emitting surface of the flexible light emitting strip and the first surface of the optical part is determined anymore.

Some exemplary embodiments of the present invention are generally described above, but it will be appreciated by a person of ordinary skill in the art that two or more of the technical features of the above disclosed embodiments of the present invention can be combined in any way deemed useful. Different modifications and variations of the above exemplary embodiments can be conceived by a person of ordinary skill in the art based on the teaching of the present disclosure.

### BRIEF DESCRIPTION OF THE DRAWINGS

Further details, features and advantages of the present invention are disclosed in the following description of exemplary embodiments in connection with the accompanying drawings, in which:
Fig. 1 schematically depicts a bracket according to an exemplary embodiment of the present invention in the form of a perspective view;
Fig. 2 schematically depicts a light module according to an exemplary embodiment of the present invention in the form of an explosion view, which includes the bracket depicted in Fig. 1;
Figs. 3A and 3B schematically illustrate an assembling process of the light module depicted in Fig. 2;
Fig. 4 is a section view of the assembled light module shown in Fig. 3B, taken along the line A-A;
Fig. 5 is a schematic enlarged view of part B of the section view depicted in Fig. 4; and
Fig. 6 schematically illustrates a method for manufacturing the bracket according to an exemplary embodiment of the present invention in the form of a flowchart.

The drawings are not necessarily drawn to scale. Throughout the drawings, like reference signs refer to like components or parts. Besides, relative positional relationships between individual components shown in the figures are only used to illustrate the basic principle of the present invention and should not be considered to limit the scope of the present invention.

### DETAILED DESCRIPTION OF THE EMBODIMENTS

While the present invention is susceptible of embodiments in many different forms, only some specific embodiments are shown in the drawings and will be described in detail herein, with the understanding that the description is to be considered as explanations of the basic principle of the present invention and not intended to limit the present invention only to the specific embodiments shown and described herein.

It will be understood that, although the terms "first", "second", "third" etc. may be used herein to describe various components, these components should not be limited by these terms. These terms are only used to distinguish one component from another. Thus, a first component discussed below could be termed as a second component without departing from the teachings of the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the verbs "comprise", "have", "include", "contain" and their conjugations, when used in this specification, specify the presence of stated features, entities, steps, operations, elements, and/or components, but do not preclude the presence or addition of one or more other features, entities, steps, operations, elements, components, and/or groups thereof. As used herein, the term "and/or" or "at least one of" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

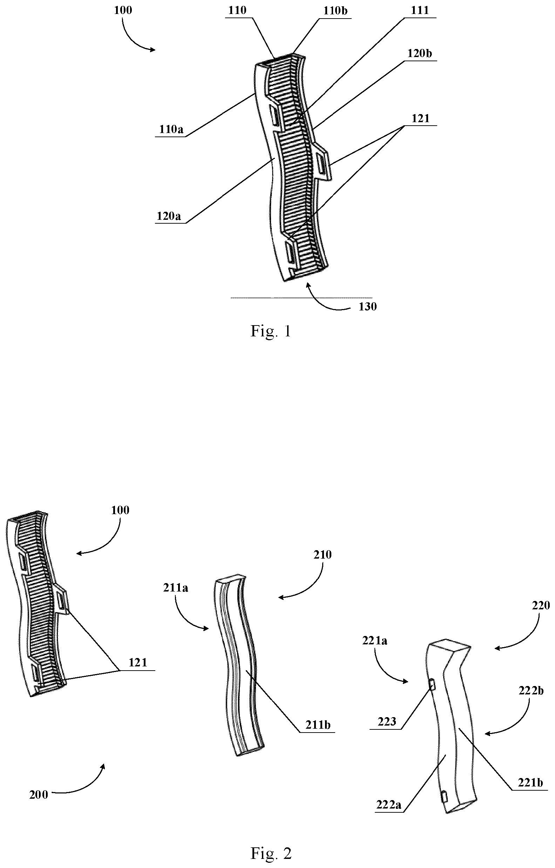

Fig. 1 shows a bracket 100 according to an exemplary embodiment of the present invention in the form of a perspective view. The bracket 100 can be used for assembling a flexible light emitting strip in a light module, which will be explained in detail hereinafter.

The bracket 100 includes a base plate 110, a first side plate 120a and a second side plate 120b. The base plate 110 includes a first side edge 110a and a second side edge 110b opposite to each other. The first side plate 120a and the second side plate 120b are located along the first side edge 110a and the second side edge 110b respectively, extending from the base plate 110 in the same direction and opposite to each other. The base plate 110, the first side plate 120a and the second side plate 120b together form a groove 130, which can be used to receive the flexible light emitting strip of the light module.

The base plate 110, the first side plate 120a and the second side plate 120b may be formed to be one-piece by e.g. injection moulding using any suitable materials, such as plastic materials. In this situation, the first side plate 120a and the second side plate 120b may be extension parts on a surface of the base plate 110. Alternatively, the base plate 110, the first side plate 120a and the second side plate 120b may be formed as separate components, which may be combined together in any suitable way, for example, by bolts or screws.

Each of the first side plate 120a and the second side plate 120b includes at least one first engagement member 121, which may be used for coupling with a corresponding second engagement member. As shown in Fig. 1, the first engagement member 121 is an extension part on a surface of the first side plate 120a or the second side plate 120b facing away from the base plate, with a snap hole formed at a center of the extension part, through which the second engagement member like a snap tab may go, so that a snap-fit structure may be formed. Alternatively, the first engagement member 121 may be a snap tab, and the corresponding second engagement member may include a snap hole. It can be appreciated that the first engagement member 121 may be any suitable type of engagement member, such as a bolt or a pin, as long as it can form a fastening structure with a corresponding second engagement member. In addition, it should be noted that the first side plate 120a and the second side plate 120b may have different numbers of the first engagement members 121.

The shape of the base plate 110 is defined by the first side edge 110a and the second side edge 110b thereof. In Fig. 1, the first side edge 110a and the second side edge 110b of the base plate 110 have a same curvilinear shape, and accordingly, the base plate 110 has a curved shape. However, the first side edge 110a and the second side edge 110b may also have a linear shape, and accordingly the base plate 110 may have a planar shape. In addition, in some exemplary embodiments, one of the first side edge 110a and the second side edge 110b may have a curvilinear shape, and the other one may have a linear shape, or the first side edge 110a and the second side edge 110b may have different curvilinear shapes. Furthermore, in some exemplary embodiments, the base plate 110 as well as the first and second side plates 120a, 120b can be made of flexible materials, so that they can be changed in shape as desired.

In the bracket 100 of Fig. 1, the first side edge 110a and the second side edge 110b are substantially parallel with each other, and the first side plate 120a and the second side plate 120b are substantially parallel with each other as well. However, in some exemplary embodiments, the first side edge 110a and the second side edge 110b may be nonparallel with each other. As shown in Fig. 1, the first and second side plates 120a, 120b each extend in a plane substantially perpendicular to the surface of the base plate 110 to from the side walls of the groove 130.

As shown in Fig. 1, the base plate 110 includes a plurality of ribs 111 on a surface inside the groove 130. The ribs 111 on the base plate 110 are parallel to each other, and each of the ribs 111 extends from the first side edge 110a to the second side edge 110b. However, the ribs 111 may not extend across the whole groove 130. In this situation, at least some ribs 110 may extend along a part of the width of the groove 130. In some exemplary embodiments, some ribs 111 may extend from the first side edge 110a, and the other ribs 111 may extend from the second side edge 110b. In Fig. 1, the ribs 111 extend in a direction substantially perpendicular to the first side edge 110a or the second side edge 110b; however, in some exemplary embodiments, the ribs 111 may also extend in a direction not perpendicular to the first side edge 110a or the second side edge 110b.

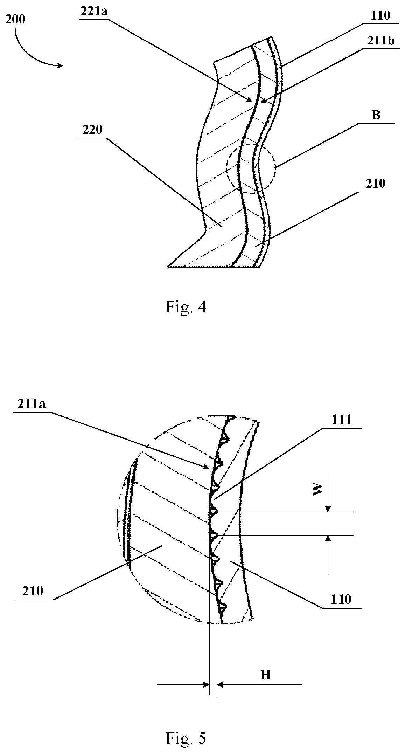

Please refer to Fig. 5, it is a schematic enlarged view showing some details of the ribs 111 on the base plate 110. It can be clearly seen in Fig. 5 that with the ribs 111, the face-to-face contact between the base plate 110 and a corresponding contact surface of a flexible light emitting strip can be changed to a line-to-face contact, and thus, the contour surface of the top ends of the plurality of ribs 111 on the base plate 110 forms the actual surface supporting the flexible light emitting strip. Since one or more characteristics of the ribs 111, such as the size of a rib (i.e. the width W and/or height H of a rib, as shown in Fig. 5), the shape of the top end of a rib and the distribution of ribs, can be changed during an injection moulding process by adjusting injection molds, the shape of the contour surface can be changed accordingly, making the contour surface tightly contact the flexible light emitting strip without any gap existing between the flexible light emitting strip and an optical part. As non-limiting examples, the ribs 111 on the base plate 110 may have a height H ranging from 0.2 mm to 1 mm, a width W ranging from 0.1 mm to 1 mm, an arc shape on each top surface thereof, and a distribution ranging from 100 to 200 ribs per meter along the first side edge 110a or the second side edge 110b. The width W of the rib 111 may be chosen to be close to the thickness of the base plate 110, which may facilitate the manufacture of the bracket 100 by an injection moulding process.

Returning to Fig. 1, as shown, the second side plate 120b also includes a plurality of ribs 111 on a surface inside the groove 130. The ribs 111 on the second side plate 120b are parallel to each other and extending from the second side edge 110b. The first side plate 120a may also include a plurality of ribs 111 on a surface inside the groove 130, and the ribs 111 on the first side plate 120a may be parallel to each other and extending from the first side edge 110a. The ribs 111 on the first side plate 120a and the second side plate 120b function like the ribs 111 on the base plate 110, so as to tightly contact the side surfaces of a flexible light emitting strip, which may further facilitate the accurate positioning of the flexible light emitting strip. As non-limiting examples, the ribs 111 on the first side plate 120a and the second side plate 120b may also have a height H ranging from 0.2 mm to 1 mm, a width W ranging from 0.1 mm to 1 mm, an arc shape on each top surface thereof, and/or a distribution ranging from 100 to 200 ribs per meter along the first side edge 110a or the second side edge 110b. However, in some exemplary embodiments, it may be possible that no rib is provided on the first side plate 120a or the second side plate 120b, or neither of them. Furthermore, the ribs on the first side plate 120a and/or the second side plate 120b may have different characteristics from those of the ribs on the base plate 110.

It should be noted that the ribs on the base plate 110, the first side plate 120a and/or the second side plate 120b may be replaced with projections in any appropriate forms, such as dots, pillars or the like, as long as the projections can change the face-to-face contact between the flexible light emitting strip and the bracket. The projections, such as the ribs 111, may be formed in one-piece with the base plate 110, the first side plate 120a and the second side plate 120b respectively by e.g. injection moulding. Thus, the characteristics of the projections, such as the size of each projection, the shape of the top end of each projection and the distribution of the projections, may be adjusted by different injection molds. In addition, the projections may be made of flexible materials as well.

According to some exemplary embodiments of the present invention, the bracket 100 is designed to be used in a light module to secure a flexible light emitting strip to an optical part. Fig. 2 schematically depicts a light module 200 in the form of an explosion view. As shown, the light module 200 includes the bracket 100 as shown in Fig. 1, a flexible light emitting strip 210 and an optical part 220.

The flexible light emitting strip 210 includes a back surface 211a and a light-emitting surface 211b opposite to each other. The flexible light emitting strip 210 may be received in the groove 130 of the bracket 100 and the back surface 211a of the flexible light emitting strip 210 may contact the ribs 111 on the base plate 110 of the bracket 100 when assembled. Thus, the back surface 211a may typically have a shape corresponding to the base plate 110, as shown in Fig. 2.

Typically, the flexible light emitting strip 210 may be a flexible LED light strip, such as a 3D LED. It may be changeable in shape and may include a plurality of light-emitting diodes (LEDs). However, the present invention is not limited thereto, and the flexible light emitting strip 210 may belong to other types of strips that may include a plurality of light emitting elements, such as organic light-emitting diodes (OLED), polymer light-emitting diodes (PLED), laser diodes, incandescent sources or fluorescent sources, which may emit light through the light emitting surface 211b.

The optical part 220 includes a first surface 221a and a second surface 221b opposite to each other, as well as a first side surface 222a and a second side surface 222b opposite to each other. The first surface 221a may contact the light-emitting surface 211b of the flexible light emitting strip 210 when the optical part 220 is assembled with the flexible light emitting strip 210. Thus, the first surface 221a may typically have a shape corresponding to the light-emitting surface 211b of the flexible light emitting strip 210. Therefore, light from the flexible light emitting strip 210 may enter the optical part 220 through the first surface 221a and leave it through the second surface 221b.

To be secured with the bracket 100, the first side surface 222a of the optical part 220 may have at least one second engagement member 223 corresponding to the at least one first engagement member 121 on the first side plate 120a of the bracket 100, and the second side surface 222b may have at least one second engagement member 223 corresponding to the at least one first engagement member 121 on the second side plate 120b of the bracket 100. And the distribution of the second engagement members 223 on the first side surface 222a and the second side surface 222b may be the same as that of the first engagement members 121 on the first side plate 120a and the second side plate 120b. As shown in Fig. 2, the second engagement member 223 may be a snap tab formed on the first side surface 222a and the second side surface 222b, which may be matched with the first engagement member 121 including a snap hole as shown. Alternatively, the second engagement member 223 may belong to other types of engagement members such as a screwed hole that may be matched with a screw on the first and second side plates 120a, 120b of the bracket 100.

Typically, the optical part 220 may be made of transparent or translucent materials and may offer some optical processing to light in-coupled. For example, the optical part 220 may act as a collimator, a filter, a diffuser, a lens or the like, so that light emitted therefrom may have certain characteristics.

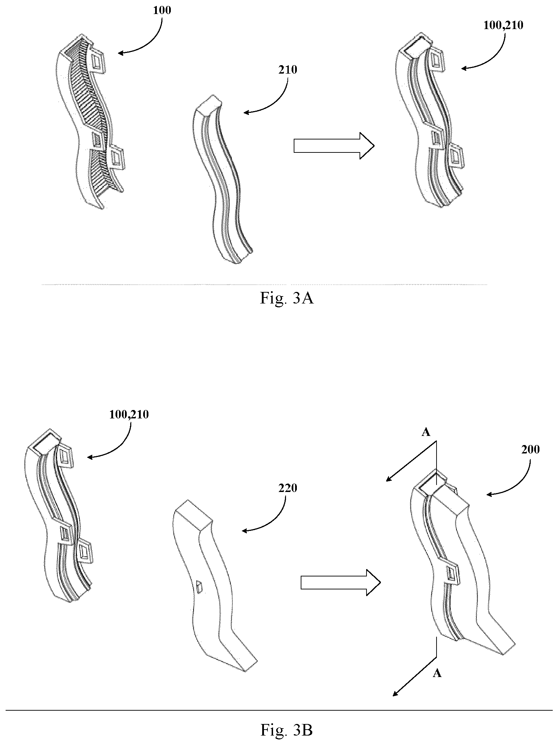

Figs. 3A and 3B schematically illustrate the assembling process of the light module 200 shown in Fig. 2.

As shown in Fig. 3A, the bracket 100 may first be assembled with the flexible light emitting strip 210, so that the flexible light emitting strip 210 may be received in the groove 130 with the back surface 211a contacting the ribs 111 on the base plate 110. As described above, the flexible light emitting strip 210 may be a flexible LED light strip that comprises a plurality of LEDs.

Turning to Fig. 3B, the assembly of the bracket 100 and the flexible light emitting strip 210 may be assembled with the optical part 220 to form the light module 200, in which the flexible light emitting strip 210 may be sandwiched between the bracket 100 and the optical part 220, with the light emitting surface 211b of the flexible light emitting strip 210 contacting the first surface 221a of the optical part 220. The ribs 111 on the base plate 100 can press the back surface 211a of the flexible light emitting strip 210, such that the light emitting surface 211b of the flexible light emitting strip 210 contacts the first surface 221a of the optical part 220 at any place of the light emitting surface 211b. When the bracket 100, the flexible light emitting strip 210 and the optical part 220 are assembled, each of the first engagement members 121 on the first side plate 120a of the bracket 100 and a corresponding one of the second engagement members 223 on the first side surface 222a of the optical part 220 are coupled with each other and form a fastening structure such as a snap-fit structure shown in Fig. 3B or a screwed fastening structure or the like; likewise, each of the first engagement members 121 on the second side plate 120b of the bracket 100 and a corresponding one of the second engagement members 223 on the second side surface 222b of the optical part 220 are also coupled with each other and form a fastening structure.

As described above, the presence of projections on the bracket 100, such as the ribs 111 shown in the figures, changes the face-to-face contact between the base plate 110 of the bracket 100 and the back surface 211a of the flexible light emitting strip 210 into a line-to-face contact. The face-to-face contact as well as the tape or glue way noted above may leave gaps between the base plate 110 of the bracket 100 and the back surface 211a of the flexible light emitting strip 210, and thus may cause corresponding gaps between the light emitting surface 211b of the flexible light emitting strip 210 and the first surface 221a of the optical part 220, which may in turn affect the in-coupling of light from the flexible light emitting strip 210 into the optical part 220. Compared to that, since the ribs 111 in the present invention can be adjusted individually, e.g. the width and/or height of each rib 111, the shape of the top end of each rib 111 and the distribution of the ribs 111 can be adjusted, the plurality of ribs 111 can eliminate any gap between the base plate 110 and the back surface 211a of the flexible light emitting strip 210, which in turn ensures that no gap exists between the light emitting surface 211b of the flexible light emitting strip 210 and the first surface 221a of the optical part 220, improving the in-coupling of the light from the flexible light emitting strip 210 into the optical part 220.

In further embodiments, there may be a plurality of recesses provided on the back surface 211a of the flexible light emitting strip 210. Each recess on the back surface 211a may correspond to a rib on the base plate 110 of the bracket 100, and may receive the corresponding rib when the flexible light emitting strip 210 is disposed in the groove 130 of the base plate 110. Accordingly, the recesses may have a shape and a distribution corresponding to those of the ribs 111 on the base plate 110. The recesses may further help to position the flexible light emitting strip 210 accurately with respect to the bracket 100.

Referring to Fig. 4, it depicts a section view of the assembled light module 200 taken along line A-A in Fig. 3B. As shown in Fig. 4, the ribs 111 on the base plate 110 of the bracket 100 abut the back surface 211a of the flexible light emitting strip 210, and thus press the flexible light emitting strip 210 onto the first surface 221a of the optical part 220 tightly. Thus, as much light as possible from the flexible light emitting strip 210 can enter the optical part 220.

Fig. 5 is an enlarged schematic view of part B of the section view shown in Fig. 4. In Fig. 5, the projections are shown as ribs with arc shapes at their top ends, and the width W and the height H of a rib are also shown. Although the top end of each rib is shown to be in an arc shape in this figure, the ribs may have other shapes at the top ends, such as triangle shape. The contacting area between the back surface 211a of the flexible light emitting strip 210 and a rib 111 is a line, so that the support at a certain local area can be improved by adjusting at least one of e.g. the height of one or more corresponding ribs, the top end shape of one or more corresponding ribs and the distribution of corresponding ribs.

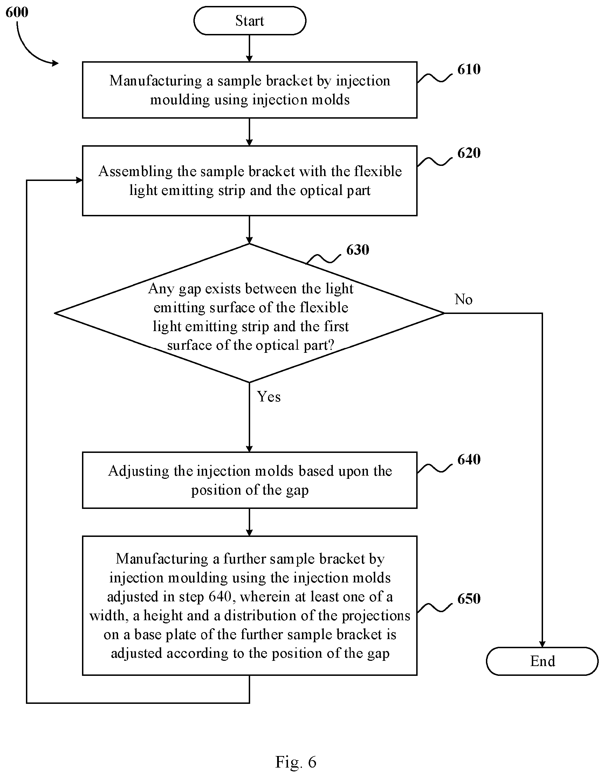

Fig. 6 schematically shows a method 600 for manufacturing the bracket 100 of a light module in the form of a flowchart. It should be noted that the steps in the method described below are not necessarily executed in the order as listed. Instead, one or more of these steps may be executed in a different order or at the same time according to the actual situations. **In** addition, it can be easily appreciated that in the method 600, any suitable materials, such as plastic materials, can be used for manufacturing the bracket 100. The method 600 comprises the following steps:
step 610, manufacturing a sample bracket by injection moulding using injection molds;
step 620, assembling the sample bracket with the flexible light emitting strip 210 and the optical part 220;
step 630, determining whether a gap exists between the light emitting surface 211a of the flexible light emitting strip 210 and the first surface 221a of the optical part 220;
step 640, adjusting the injection molds based upon the position of the gap; and
step 650, manufacturing a further sample bracket by injection moulding using the injection molds adjusted in step 640, wherein at least one of a width, a height and a distribution of the projections on a base plate of the further sample bracket is adjusted according to the position of the gap;
iterating the steps 620 to 650 until no further gap between the light emitting surface 211b of the flexible light emitting strip 210 and the first surface 221a of the optical part 220 is determined anymore. Through the iteration, injection molds may finally be obtained which can be used to manufacture a bracket that perfectly, or within a desired tolerance, assemble the flexible light emitting strip 210 onto the optical part 220 without any gaps in between.

**In** the step 640 of the method 600, adjusting the injection molds based upon the position of the gap may comprise adjusting the features on the moulding surface of a injection mold corresponding to the projections on the base plate of the bracket, such that at least one of a width, a height and a distribution of the projections on the base plate of the bracket can be adjusted accordingly during a subsequent injection moulding process.

In addition, in case that the first side plate 120a and/or the second side plate 120b of the bracket 100 may comprise ribs 111, the step 630 of the method 600 may accordingly comprise determining whether the gaps exist between the first side plate 120a and the flexible light emitting strip 210 and/or between the second side plate 120b and the flexible light emitting strip 210.

Variations to the disclosed embodiments can be understood and effected by the skilled person in practicing the claimed invention, from a study of the drawings, the disclosure, and the appended claims. The mere fact that certain measures are recited in mutually different dependent claims does not indicate that a combination of these measures cannot be used to advantage.

### LIST OF REFERENCE NUMERALS

- 100: bracket
- 110: base plate
- 110a: first side edge
- 110b: second side edge
- 111: rib
- 120a: first side plate
- 120b: second side plate
- 121: first engagement member
- 130: groove
- 200: light module
- 210: flexible light emitting strip
- 211a: back surface
- 211b: light emitting surface
- 220: optical part
- 221a: first surface
- 221b: second surface
- 222a: first side surface
- 222b: second side surface
- 223: second engagement member
- 600: manufacturing method
- 610, 620, 630, 640, 650: steps of manufacturing method

## Claims

1. A bracket (100) for assembling a flexible light emitting strip (210) in a light module (200), comprising:
a base plate (110), comprising a first side edge (110a) and a second side edge (110b) opposite to each other,
a first side plate (120a), located along the first side edge (110a), extending from the base plate (110) and comprising at least one first engagement member (121); and
a second side plate (120b), located along the second side edge (110b), extending from the base plate (110), opposite to the first side plate (120a) and comprising at least one another first engagement member (121);
wherein the base plate (110), the first side plate (120a) and the second side plate (120b) form a groove (130), and
wherein the base plate (110) comprises a plurality of projections on a surface inside the groove (130), wherein the projections on the base plate (110) are ribs (111) parallel to each other with each rib (111) extending from the first side edge (110a) or the second side edge (110b), **characterized in that** each of the first side edge (110a) and the second side edge (110b) has a curvilinear shape.

2. The bracket (100) according to claim 1, wherein the base plate (110), the first side plate (120a) and the second side plate (120b) are one-piece.

3. The bracket (100) according to claim 1 or 2, wherein the first side edge (110a) and the second side edge (110b) are parallel to each other, and the first side plate (120a) and the second side plate (120b) are parallel to each other.

4. The bracket (100) according to any of the preceding claims, wherein each of the first side plate (120a) and the second side plate (120b) comprise a plurality of projections on a surface inside the groove (130).

5. The bracket (100) according to claim 4, wherein the projections on the first side plate (120a) are ribs (111) parallel to each other with each rib (111) extending from the first side edge (110a), and wherein the projections on the second side plate (120b) are ribs (111) parallel to each other with each rib (111) extending from the second side edge (110b).

6. The bracket (100) according to any of the preceding claims, wherein each rib (111) has a width ranging from 0.1 mm to 1 mm.

7. The bracket (100) according to any of the preceding claims, wherein each rib (111) has a height ranging from 0.2 mm to 1 mm.

8. The bracket (100) according to any of the preceding claims, wherein each rib (111) has an arc shape on its top surface.

9. The bracket (100) according to claim 5, wherein the ribs (111) on the base plate (110), the first side plate (120a) and the second side plate (120b) have a distribution ranging from 100 to 200 ribs (111) per meter along the first side edge (110a) or the second side edge (110b).

10. A light module (200) comprising:
the bracket (100) according to any one of claims 1 to 9;
the flexible light emitting strip (210), comprising a back surface (211a) and a light emitting surface (211b) opposite to each other, wherein the back surface (211a) has a shape corresponding to the base plate (110); and
an optical part (220), comprising a first surface (221a) and a second surface (221b) opposite to each other, a first side surface (222a) and a second side surface (222b) opposite to each other, wherein the first surface (221a) has a shape corresponding to the light emitting surface (211b) of the flexible light emitting strip (210), the first side surface (222a) of the optical part (220) having at least one second engagement member (223) corresponding to the at least one first engagement member (121) on the first side plate (120a) of the bracket (110), and the second side surface (222b) of the optical part (220) having at least one another second engagement member (223) corresponding to the at least one another first engagement member (121) on the second side plate (120b) of the bracket (100);
wherein the flexible light emitting strip (210) is disposed in the groove (130) with the back surface (211a) of the flexible light emitting strip (210) contacting the projections on the base plate (110) of the bracket (100), the flexible light emitting strip (210) being sandwiched between the bracket (100) and the optical part (220) with the first surface (221a) of the optical part (220) contacting the light emitting surface (211b) of the flexible light emitting strip (210) and the projections on the base plate (110) pressing the back surface (211a) of the flexible light emitting strip (210), such that the light emitting surface (211b) of the flexible light emitting strip (210) contacts the first surface (221a) of the optical part (220) at any place of the light emitting surface (211b);
wherein each of the first engagement members (121) and a corresponding one of the second engagement members (223) are coupled with each other; and
wherein each of the another first engagement members (121) and a corresponding one of the another second engagement members (223) are coupled with each other.

11. The light module (200) according to claim 10, wherein the flexible light emitting strip (210) is a flexible LED light strip.

12. The light module (200) according to claim 10 or 11, wherein a plurality of recesses are provided on the back surface (211a) of the flexible light emitting strip (210) with each recess on the back surface corresponding to one of the projections on the base plate (110).

13. A method (600) for manufacturing the bracket (100) of the light module (200) according to claim 10, comprising the steps of:
manufacturing a sample bracket by injection moulding using injection molds;
assembling the sample bracket with the flexible light emitting strip (210) and the optical part (220);
determining a gap between the light emitting surface (211b) of the flexible light emitting strip (210) and the first surface (221a) of the optical part (220);
adjusting the injection molds based upon the position of the gap;
manufacturing a further sample bracket by injection moulding using the injection molds adjusted in the previous step, wherein at least one of a width, a height and a distribution of the projections on the base plate of the further sample bracket is adjusted according to the position of the gap; and
iterating the steps of assembling, gap determination, injection molds adjustment, and sample bracket manufacturing until no further gap between the light emitting surface (211b) of the flexible light emitting strip (210) and the first surface (221a) of the optical part (220) is determined anymore.

## Patentansprüche

1. Halterung (100) zum Montieren eines flexiblen lichtemittierenden Streifens (210) in einem Lichtmodul (200), aufweisend:
eine Basisplatte (110), die eine erste Seitenkante (110a) und eine zweite Seitenkante (110b) aufweist, die einander gegenüberliegen,
eine erste Seitenplatte (120a), die entlang der ersten Seitenkante (110a) angeordnet ist, sich von der Basisplatte (110) erstreckt und mindestens ein erstes Eingriffselement (121) aufweist; und
eine zweite Seitenplatte (120b), die entlang der zweiten Seitenkante (110b) angeordnet ist, sich von der Basisplatte (110) aus erstreckt, der ersten Seitenplatte (120a) gegenüberliegend und mindestens ein weiteres erstes Eingriffselement (121) aufweist;
wobei die Basisplatte (110), die erste Seitenplatte (120a) und die zweite Seitenplatte (120b) eine Nut (130) bilden, und
wobei die Basisplatte (110) eine Mehrzahl von Vorsprüngen auf einer Oberfläche innerhalb der Nut (130) aufweist, wobei die Vorsprünge auf der Basisplatte (110) zueinander parallele Rippen (111) sind, wobei sich jede Rippe (111) von der ersten Seitenkante (110a) oder der zweiten Seitenkante (110b) erstreckt, **dadurch gekennzeichnet, dass** die erste Seitenkante (110a) und die zweite Seitenkante (110b) jeweils eine gekrümmte Form aufweisen.

2. Halterung (100) nach Anspruch 1, wobei die Basisplatte (110), die erste Seitenplatte (120a) und die zweite Seitenplatte (120b) einteilig sind.

3. Halterung (100) nach Anspruch 1 oder 2, wobei die erste Seitenkante (110a) und die zweite Seitenkante (110b) parallel zueinander verlaufen und die erste Seitenplatte (120a) und die zweite Seitenplatte (120b) parallel zueinander verlaufen.

4. Halterung (100) nach einem der vorstehenden Ansprüche, wobei die erste Seitenplatte (120a) und die zweite Seitenplatte (120b) jeweils eine Mehrzahl von Vorsprüngen auf einer Oberfläche innerhalb der Nut (130) aufweisen.

5. Halterung (100) nach Anspruch 4, wobei die Vorsprünge an der ersten Seitenplatte (120a) zueinander parallele Rippen (111) sind, wobei sich jede Rippe (111) von der ersten Seitenkante (110a) erstreckt, und wobei die Vorsprünge an der zweiten Seitenplatte (120b) zueinander parallele Rippen (111) sind, wobei sich jede Rippe (111) von der zweiten Seitenkante (110b) erstreckt.

6. Halterung (100) nach einem der vorstehenden Ansprüche, wobei jede Rippe (111) eine Breite im Bereich von 0,1 mm bis 1 mm aufweist.

7. Halterung (100) nach einem der vorstehenden Ansprüche, wobei jede Rippe (111) eine Höhe im Bereich von 0,2 mm bis 1 mm aufweist.

8. Halterung (100) nach einem der vorstehenden Ansprüche, wobei jede Rippe (111) an ihrer Oberseite eine Bogenform aufweist.

9. Halterung (100) nach Anspruch 5, wobei die Rippen (111) auf der Basisplatte (110), der ersten Seitenplatte (120a) und der zweiten Seitenplatte (120b) entlang der ersten Seitenkante (110a) oder der zweiten Seitenkante (110b) in einer Anzahl von 100 bis 200 Rippen (111) pro Meter verteilt sind. (110b) auf.

10. Lichtmodul (200), aufweisend:
die Halterung (100) gemäß einem der Ansprüche 1 bis 9;
den flexiblen lichtemittierenden Streifen (210), der eine Rückseite (211a) und eine lichtemittierende Oberfläche (211b) aufweist, die einander gegenüberliegen, wobei die Rückseite (211a) eine Form aufweist, die der Basisplatte (110) entspricht; und
einen optischen Teil (220), der eine erste Oberfläche (221a) und eine zweite Oberfläche (221b), die einander gegenüberliegen, eine erste Seitenfläche (222a) und eine zweite Seitenfläche (222b), die einander gegenüberliegen, aufweist, wobei die erste Oberfläche (221a) eine Form aufweist, die der lichtemittierenden Oberfläche (211b) des flexiblen lichtemittierenden Streifens (210) entspricht, wobei die erste Seitenfläche (222a) des optischen Teils (220) mindestens ein zweites Eingriffselement (223) aufweist, das dem mindestens einen ersten Eingriffselement (121) auf der ersten Seitenplatte (120a) der Halterung (110) entspricht, und die zweite Seitenfläche (222b) des optischen Teils (220) mindestens ein weiteres zweites Eingriffselement (223) aufweist, das dem mindestens einen weiteren ersten Eingriffselement (121) auf der zweiten Seitenplatte (120b) der Halterung (100) entspricht;
wobei der flexible lichtemittierende Streifen (210) in der Nut (130) angeordnet ist, wobei die Rückseite (211a) des flexiblen lichtemittierenden Streifens (210) die Vorsprünge an der Basisplatte (110) der Halterung (100) berührt, wobei der flexible lichtemittierende Streifen (210) zwischen der Halterung (100) und dem optischen Teil (220) angeordnet ist, wobei die erste Oberfläche (221a) des optischen Teils (220) die lichtemittierende Oberfläche (211b) des flexiblen lichtemittierenden Streifens (210) berührt und die Vorsprünge auf der Basisplatte (110) die Rückseite (211a) des flexiblen lichtemittierenden Streifens (210) drücken, so dass die lichtemittierende Oberfläche (211b) des flexiblen lichtemittierenden Streifens (210) die erste Oberfläche (221a) des optischen Teils (220) an jeder Stelle der lichtemittierenden Oberfläche (211b) berührt;
wobei jedes der ersten Eingriffselemente (121) und ein entsprechendes der zweiten Eingriffselemente (223) miteinander gekoppelt sind; und
wobei jedes der weiteren ersten Eingriffselemente (121) und ein entsprechendes der weiteren zweiten Eingriffselemente (223) miteinander gekoppelt sind.

11. Lichtmodul (200) nach Anspruch 10, wobei der flexible lichtemittierende Streifen (210) ein flexibler LED-Lichtstreifen ist.

12. Lichtmodul (200) nach Anspruch 10 oder 11, wobei eine Mehrzahl von Aussparungen auf der Rückseite (211a) des flexiblen lichtemittierenden Streifens (210) vorgesehen ist, wobei jede Aussparung auf der Rückseite einem der Vorsprünge auf der Basisplatte (110) entspricht.

13. Verfahren (600) zur Herstellung der Halterung (100) des Lichtmoduls (200) gemäß Anspruch 10, aufweisend die Schritte:
Herstellen einer Musterhalterung durch Spritzgießen unter Verwendung von Spritzgussformen;
Zusammenbau der Musterhalterung mit dem flexiblen lichtemittierenden Streifen (210) und dem optischen Teil (220);
Feststellen eines Spaltes zwischen der lichtemittierenden Oberfläche (211b) des flexiblen lichtemittierenden Streifens (210) und der ersten Oberfläche (221a) des optischen Teils (220);
Anpassen der Spritzgussformen auf Grundlage der Position des Spaltes;
Herstellen einer weiteren Musterhalterung durch Spritzgießen unter Verwendung der im vorherigen Schritt angepassten Spritzgießformen, wobei mindestens eines von einer Breite, einer Höhe und einer Verteilung der Vorsprünge auf der Basisplatte der weiteren Musterhalterung entsprechend der Position des Spaltes angepasst wird; und
Iterieren der Schritte des Zusammenbauens, Feststellens des Spaltes, Anpassens der Spritzgießformen und Herstellens der Musterhalterung, bis kein weiterer Spalt zwischen der lichtemittierenden Oberfläche (211b) des flexiblen lichtemittierenden Streifens (210) und der ersten Oberfläche (221a) des optischen Teils (220) mehr festgestellt wird.

## Revendications

1. Support (100) destiné à assembler une bande électroluminescente souple (210) dans un module lumineux (200), comportant :
une plaque de base (110), comportant un premier bord latéral (110a) et un second bord latéral (110b) opposés l'un à l'autre,
une première plaque latérale (120a), située le long du premier bord latéral (110a), s'étendant à partir de la plaque de base (110) et comportant au moins un premier élément de prise (121), et
une seconde plaque latérale (120b), située le long du second bord latéral (110b), s'étendant à partir de la plaque de base (110), opposée à la première plaque latérale (120a) et comportant au moins un autre premier élément de prise (121),
dans lequel la plaque de base (110), la première plaque latérale (120a) et la seconde plaque latérale (120b) forment une gorge (130), et
dans lequel la plaque de base (110) comporte une pluralité de saillies sur une surface à l'intérieur de la gorge (130), dans lequel les saillies sur la plaque de base (110) sont des nervures (111) parallèles les unes aux autres, chaque nervure (111) s'étendant à partir du premier bord latéral (110a) ou du second bord latéral (110b), **caractérisé en ce que** chaque bord parmi le premier bord latéral (110a) et le second bord latéral (110b) a une forme curviligne.

2. Support (100) selon la revendication 1, dans lequel la plaque de base (110), la première plaque latérale (120a) et la seconde plaque latérale (120b) sont d'une seule pièce.

3. Support (100) selon la revendication 1 ou 2, dans lequel le premier bord latéral (110a) et le second bord latéral (110b) sont parallèles l'un à l'autre, et la première plaque latérale (120a) et la seconde plaque latérale (120b) sont parallèles l'une à l'autre.

4. Support (100) selon l'une quelconque des revendications précédentes, dans lequel chaque plaque parmi la première plaque latérale (120a) et la seconde plaque latérale (120b) comporte une pluralité de saillies sur une surface à l'intérieur de la gorge (130).

5. Support (100) selon la revendication 4, dans lequel les saillies sur la première plaque latérale (120a) sont des nervures (111) parallèles les unes aux autres, chaque nervure (111) s'étendant à partir du premier bord latéral (110a), et dans lequel les saillies sur la seconde plaque latérale (120b) sont des nervures (111) parallèles les unes aux autres, chaque nervure (111) s'étendant à partir du second bord latéral (110b).

6. Support (100) selon l'une quelconque des revendications précédentes, dans lequel chaque nervure (111) a une largeur variant de 0,1 mm à 1 mm.

7. Support (100) selon l'une quelconque des revendications précédentes, dans lequel chaque nervure (111) a une hauteur variant de 0,2 mm à 1 mm.

8. Support (100) selon l'une quelconque des revendications précédentes, dans lequel chaque nervure (111) a une forme d'arc sur sa surface supérieure.

9. Support (100) selon la revendication 5, dans lequel les nervures (111) sur la plaque de base (110), la première plaque latérale (120a) et la seconde plaque latérale (120b) ont une répartition variant de 100 à 200 nervures (111) par mètre le long du premier bord latéral (110a) ou du second bord latéral (110b).

10. Module lumineux (200) comportant :
le support (100) selon l'une quelconque des revendications 1 à 9,
la bande électroluminescente souple (210), comportant une surface arrière (211a) et une surface électroluminescente (211b) opposées l'une à l'autre, dans lequel la surface arrière (211a) a une forme correspondant à la plaque de base (110), et
une partie optique (220), comportant une première surface (221a) et une seconde surface (221b) opposées l'une à l'autre, une première surface latérale (222a) et une seconde surface latérale (222b) opposées l'une à l'autre, dans lequel la première surface (221a) a une forme correspondant à la surface électroluminescente (211b) de la bande électroluminescente souple (210), la première surface latérale (222a) de la partie optique (220) ayant au moins un second élément de prise (223) correspondant au au moins un premier élément de prise (121) sur la première plaque latérale (120a) du support (110), et la seconde surface latérale (222b) de la partie optique (220) ayant au moins un autre second élément de prise (223) correspondant au au moins un autre premier élément de prise (121) sur la seconde plaque latérale (120b) du support (100),
dans lequel la bande électroluminescente souple (210) est disposée dans la gorge (130), la surface arrière (211a) de la bande électroluminescente souple (210) étant en contact avec les saillies de la plaque de base (110) du support (100), la bande électroluminescente souple (210) étant prise en sandwich entre le support (100) et la partie optique (220), la première surface (221a) de la partie optique (220) étant en contact avec la surface électroluminescente (211b) de la bande électroluminescente souple (210) et les saillies sur la plaque de base (110) pressant la surface arrière (211a) de la bande électroluminescente souple (210), de telle sorte que la surface électroluminescente (211b) de la bande électroluminescente souple (210) est en contact avec la première surface (221a) de la partie optique (220) à un endroit quelconque de la surface électroluminescente (211b),
dans lequel chacun des premiers éléments de prise (121) et un élément correspondant parmi les seconds éléments de prise (223) sont couplés l'un à l'autre, et
dans lequel chacun des autres premiers éléments de prise (121) et un élément correspondant parmi les autres seconds éléments de prise (223) sont couplés l'un à l'autre.

11. Module lumineux (200) selon la revendication 10, dans lequel la bande électroluminescente souple (210) est une bande lumineuse à LED souple.

12. Module lumineux (200) selon la revendication 10 ou 11, dans lequel une pluralité d'évidements sont ménagés sur la surface arrière (211a) de la bande électroluminescente souple (210), chaque évidement sur la surface arrière correspondant à l'une des saillies sur la plaque de base (110).

13. Procédé (600) de fabrication du support (100) du module lumineux (200) selon la revendication 10, comportant les étapes consistant à :
fabriquer un support d'échantillon par moulage par injection en utilisant des moules d'injection,
assembler le support d'échantillon avec la bande électroluminescente souple (210) et la partie optique (220),
déterminer un espace entre la surface électroluminescente (211b) de la bande électroluminescente souple (210) et la première surface (221a) de la partie optique (220),
régler les moules d'injection sur la base de la position de l'espace,
fabriquer un support d'échantillon supplémentaire par moulage par injection en utilisant les moules d'injection réglés à l'étape précédente, dans lequel au moins un élément parmi une largeur, une hauteur et une répartition des saillies sur la plaque de base du support d'échantillon supplémentaire est réglé en fonction de la position de l'espace, et
itérer les étapes d'assemblage, de détermination d'espace, de réglage des moules d'injection et de fabrication du support d'échantillon jusqu'à ce qu'aucun espace supplémentaire entre la surface électroluminescente (211b) de la bande électroluminescente souple (210) et la première surface (221a) de la partie optique (220) ne soit plus déterminé.
